# EUROPEAN PATENT APPLICATION

(11) **EP 4 790 890 A2**
(43) Date of publication of application: **12.08.2026**
(21) Application number: 25227736.3
(22) Date of filing: 30.12.2025
(51) Int. Cl.: H02S 20/32

(54) **MAIN SHAFT OF PHOTOVOLTAIC TRACKING SUPPORT AND PHOTOVOLTAIC TRACKING SUPPORT**

(30) Priority: 11.02.2025 CN 202520213985 U
(71) Applicant: Arctech Solar Holding Co., Ltd., Kunshan, Jiangsu 215331 (CN)
(72) Inventor: XU, Zhen, 215331 Kunshan (CN); CHEN, Jingqiang, 215331 Kunshan (CN); YANG, Ying, 215331 Kunshan (CN)
(74) Representative: Michalski Hüttermann & Partner mbB

(57) **Abstract**

The present invention discloses a main shaft of a photovoltaic tracking support and the photovoltaic tracking support itself. A cross-section of the main shaft is of a compact cross-section. This cross-section includes four planar segments and four arc segments. The four planar segments and the four arc segments are alternately arranged circumferentially to form a square tubular structure. Widths of the four planar segments are equal, and radians of the four arc segments are also equal, making the square tubular structure formed by the four planar segments and the four arc segments centrally symmetric about an axis of the main shaft. A ratio of the width x' of the planar segment to a wall thickness t of the main shaft, i.e., a width-to-thickness ratio x'/t, falls within a range of 20 to 25, which achieves a balance and compromise between torsional strength and bending strength, thereby providing better stability.

## Description

### CROSS-REFERENCE TO RELATED APPLICATION

This patent application claims priority of a Chinese Patent Application No. 202520213985.X, filed on February 11, 2025 and titled "MAIN SHAFT OF PHOTOVOLTAIC TRACKING SUPPORT AND PHOTOVOLTAIC TRACKING SUPPORT".

### TECHNICAL FIELD

The present invention relates to the field of photovoltaic technology, specifically to a main shaft of a photovoltaic tracking support and the photovoltaic tracking support.

### BACKGROUND

For photovoltaic tracking supports, a main shaft not only transmits torque to enable the rotation of photovoltaic modules according to the controller's commands but also transfers the loads from the modules themselves and forces, such as the wind, snow they bear back to the columns. Currently, the market offers a wide variety of main shaft designs for photovoltaic tracking supports. Among the common types of main shafts, square tube-shaped main shafts exhibit good bending strength but poor torsional strength.

To address the issue of poor torsional strength, related technologies have introduced a main shaft including four flat segments and four arc segments, arranged alternately. However, when simply changing the cross-sectional shape of the main shaft from a rectangle (or square) to alternating flat and arc segments, these technologies have focused only on bending strength while neglecting torsional strength, failing to strike a good balance between bending strength and torsional strength. This results in warping deformation of the main shaft, severely affecting the normal operation of the photovoltaic tracking support and leading to a situation where one aspect is improved at the expense of another.

### SUMMARY

An object of the present invention is to provide a main shaft of a photovoltaic tracking support and the photovoltaic tracking support, which possess both excellent torsional strength and bending strength, resulting in superior overall structural integrity.

To achieve the above object, the present invention adopts the following technical solution: a main shaft of a photovoltaic tracking support, wherein a cross-section of the main shaft is a compact cross-section, the cross-section of the main shaft includes four planar segments and four arc segments, the four planar segments and the four arc segments are alternately arranged sequentially along a circumferential direction to form a square tubular structure; widths of the four planar segments are equal and radians of the four arc segments are also equal, causing the square tubular structure formed by the four planar segments and the four arc segments to be centrally symmetrical relative to an axis of the main shaft, and a ratio of a width x' of the planar segment to a wall thickness t of the main shaft, namely a width-to-thickness ratio x'/t, is between 20 and 25, inclusively.

As a technical improvement of the present invention, the width-to-thickness ratio x'/t is between 20 and 22.5, inclusively.

As a technical improvement of the present invention, a material of the main shaft is Q355 steel, Q420 steel, Q500 steel, or Q550 steel.

As a technical improvement of the present invention, a radius of curvature r of the arc segment is 25 mm to 70 mm, inclusively.

As a technical improvement of the present invention, the wall thickness t of the main shaft is 2 mm to 3 mm, inclusively.

As a technical improvement of the present invention, an original width x of the main shaft is a vertical distance between outer walls of two opposite planar segments, a radius of curvature of the arc segment is r, wherein x'=x-2r, and the original width x of the main shaft is 100 mm to 200 mm, inclusively.

As a technical improvement of the present invention, the main shaft includes a plurality of shaft segments which are separably arranged, and the plurality of shaft segments are connected end to end to form an integral whole.

As a technical improvement of the present invention, the main shaft includes a first shaft segment, a second shaft segment and a connecting component; the first shaft segment and the second shaft segment are connected end to end; the first shaft segment includes a first end portion and a second end portion which are arranged oppositely; the second shaft segment includes a third end portion and a fourth end portion which are arranged oppositely; the second end portion and the third end portion are arranged adjacent to each other in a linear direction in which the main shaft extends, and the connecting component envelops exteriors of the second end portion and the third end portion.

As a technical improvement of the present invention, the connecting component is of a split type or an integral type.

As a technical improvement of the present invention, the main shaft further includes a fastener, and the fastener passes through the connecting component, the second end portion and the third end portion.

As a technical improvement of the present invention, the main shaft includes a first shaft segment, a second shaft segment and a fastener; the first shaft segment and the second shaft segment each includes a reduced-diameter end portion and a non-reduced-diameter accommodating end portion which are arranged oppositely; the reduced-diameter end portion of the first shaft segment is inserted into the non-reduced-diameter accommodating end portion of the second shaft segment, and the fastener extends through the reduced-diameter end portion of the first shaft segment and the non-reduced-diameter accommodating end portion of the second shaft segment.

To achieve the above object, the present invention adopts the following technical solution: a photovoltaic tracking support, including a stand column, a driving device, a purlin and the aforementioned main shaft of the photovoltaic tracking support; wherein the main shaft of the photovoltaic tracking support is installed at a top of the stand column; the purlin is installed on the main shaft of the photovoltaic tracking support for supporting a photovoltaic module; and a driving end of the driving device is connected to the main shaft of the photovoltaic tracking support for driving the main shaft of the photovoltaic tracking support to rotate.

Compared to existing technology, the present invention achieves the following technical effects:

The main shaft of the photovoltaic tracking support of the present invention features the compact cross-section. The cross-section of the main shaft includes four planar segments and four arc segments. The four planar segments and the four arc segments are alternately arranged circumferentially, forming the square tubular structure. By setting the ratio of the width of the planar segments to the wall thickness of the main shaft (width-to-thickness ratio) between 20 and 25, the main shaft of the photovoltaic tracking support achieves both superior bending strength and torsional strength. This ensures a balance and integration between torsional strength and bending strength, thereby providing enhanced stability.

### BRIEF DESCRIPTION OF DRAWINGS

FIG. 1 is a perspective view of a main shaft of a photovoltaic tracking support in accordance with a first embodiment of the present invention;
FIG. 2 is an enlarged view of portion A in FIG. 1;
FIG. 3 is a front view of FIG. 1;
FIG. 4 is an enlarged view of portion B in FIG. 3;
FIG. 5 is a perspective view of the main shaft of the photovoltaic tracking support in accordance with a second embodiment of the present invention;
FIG. 6 is an exploded perspective view of FIG. 5;
FIG. 7 is an enlarged view of portion C in FIG. 5;
FIG. 8 is a perspective view of a connecting component and a plurality of fasteners in accordance with the second embodiment of the present invention;
FIG. 9 is a top view of FIG. 8;
FIG. 10 is a cross-sectional view taken along line E-E in FIG. 9;
FIG. 11 is a schematic perspective view of the main shaft of the photovoltaic tracking support in accordance with a third embodiment of the present invention;
FIG. 12 is an enlarged view of portion G in FIG. 11;
FIG. 13 is a perspective view of a photovoltaic module installed on the photovoltaic tracking support in accordance with an embodiment of the present invention;
FIG. 14 is a perspective view of the photovoltaic tracking support with the photovoltaic module removed in accordance with an embodiment of the present invention; and
FIG. 15 is an enlarged view of portion H in FIG. 14.

### DETAILED DESCRIPTION

Exemplary embodiments will be described in detail here, examples of which are shown in drawings. When referring to the drawings below, unless otherwise indicated, same numerals in different drawings represent the same or similar elements. The examples described in the following exemplary embodiments do not represent all embodiments consistent with this application. Rather, they are merely examples of devices and methods consistent with some aspects of the application as detailed in the appended claims.

The terminology used in this application is only for the purpose of describing particular embodiments, and is not intended to limit this application. The singular forms "a", "said", and "the" used in this application and the appended claims are also intended to include plural forms unless the context clearly indicates other meanings.

It should be understood that the terms "first", "second" and similar words used in the specification and claims of this application do not represent any order, quantity or importance, but are only used to distinguish different components. Similarly, "an" or "a" and other similar words do not mean a quantity limit, but mean that there is at least one; "multiple" or "a plurality of" means two or more than two. Unless otherwise noted, "front", "rear", "lower", "upper" and similar words are for ease of description only and are not limited to one location or one spatial orientation. Similar words such as "include" or "comprise" mean that elements or objects appear before "include" or "comprise" cover elements or objects listed after "include" or "comprise" and their equivalents, and do not exclude other elements or objects. The term "a plurality of" mentioned in the present invention includes two or more.

Hereinafter, some embodiments of the present invention will be described in detail with reference to the accompanying drawings. In the case of no conflict, the following embodiments and features in the embodiments can be combined with each other.

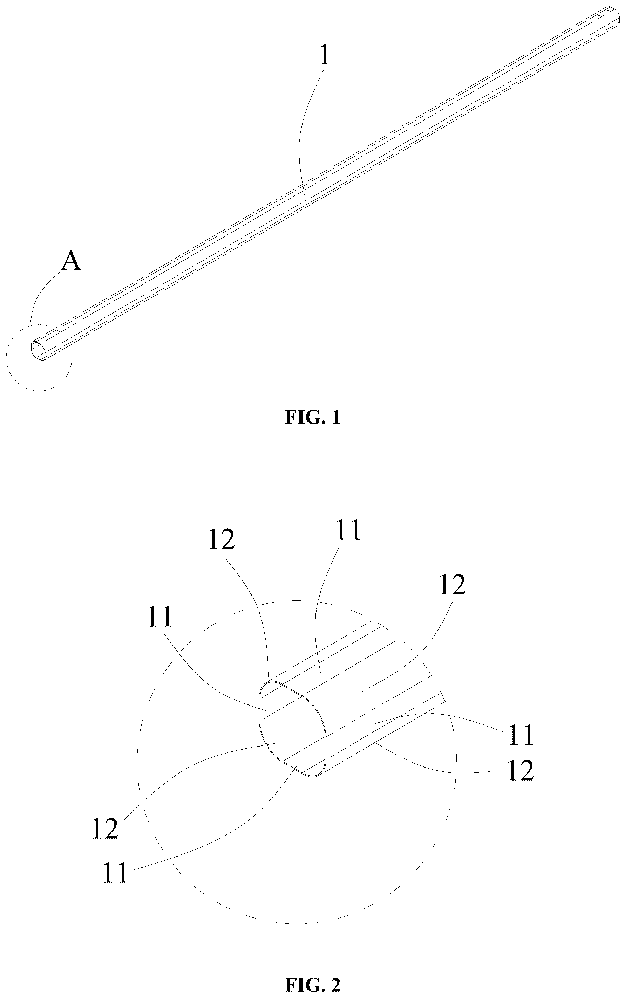

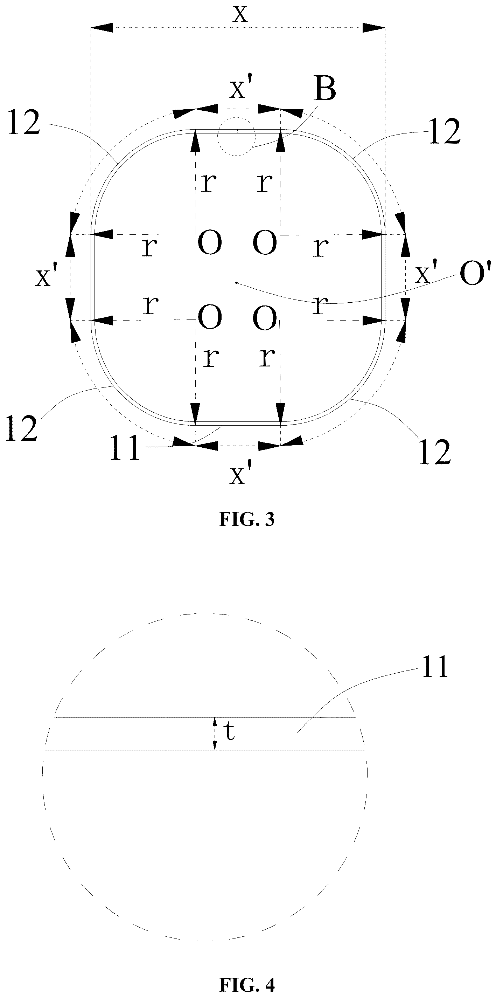

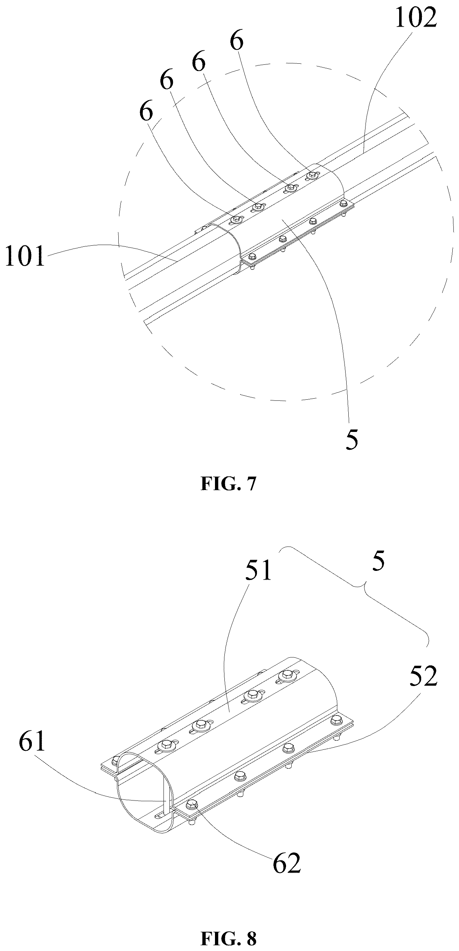

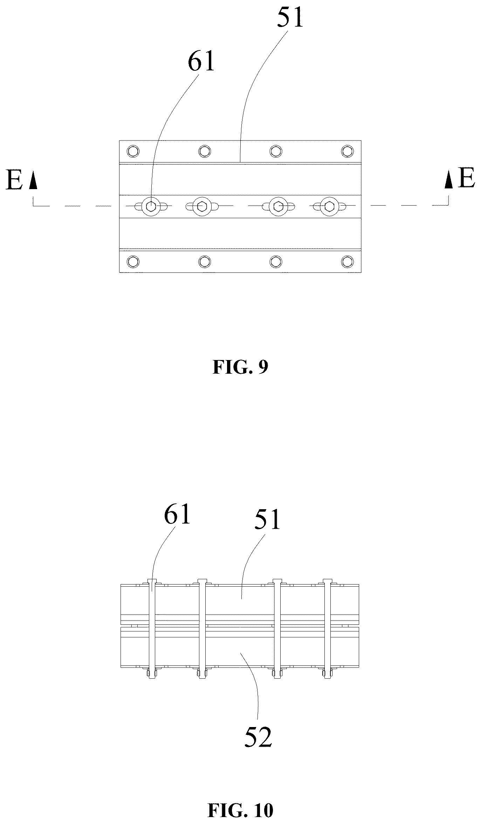

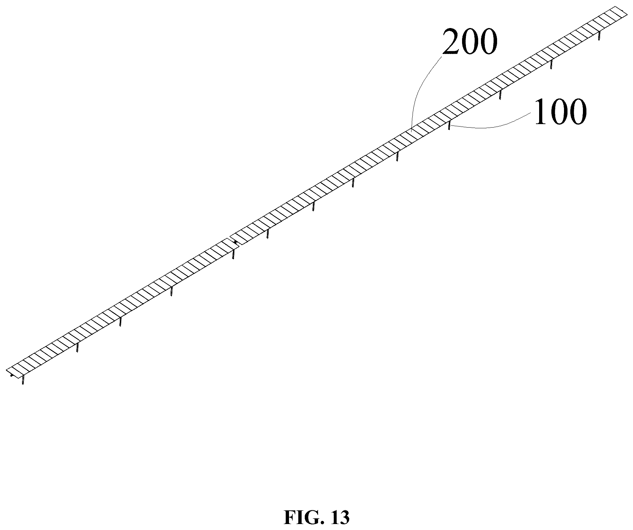

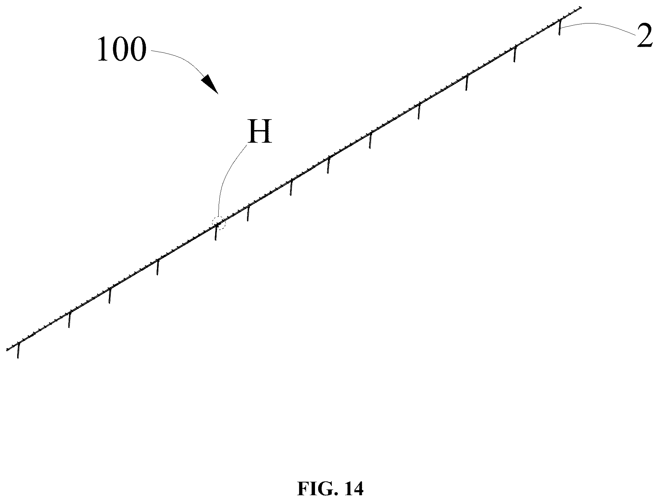

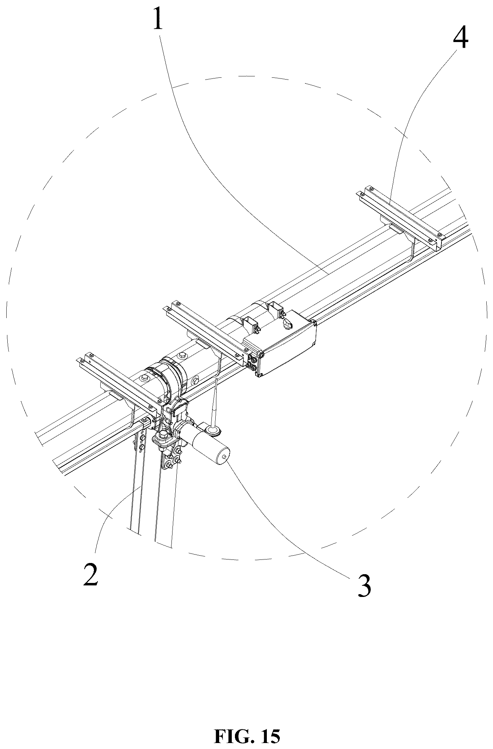

Referring to FIG. 1 to FIG. 15, particularly to FIG. 14 and FIG. 15, the present invention discloses a photovoltaic tracking support 100 which includes a main shaft 1, a plurality of columns 2, a driving device 3, and a plurality of purlins 4. The main shaft 1 of the photovoltaic tracking support 100 is installed at a top of the columns 2. The purlins 4 are mounted on the main shaft 1 of the photovoltaic tracking support 100 to support the photovoltaic module 200 shown in FIG. 13. A driving end of the driving device 3 is connected to the main shaft 1 of the photovoltaic tracking support 100 to drive a rotation of the main shaft 1 of the photovoltaic tracking support 100, thereby causing the purlins 4 mounted on the main shaft 1 of the photovoltaic tracking support 100 and the photovoltaic module 200 shown in FIG. 13 to rotate following a movement of the sun, thereby achieving greater power generation.

Referring to FIG. 1 to FIG. 12 and FIG. 15, the main shaft 1 of the photovoltaic tracking support 100 of the present invention is illustrated. A cross-section of the main shaft 1 is a compact cross-section (a concept of a compact cross-section is a well-known technique in the field and will not be elaborated further). The main shaft 1 of the photovoltaic tracking support 100 includes four planar segments 11 and four arc segments 12. The four planar segments 11 and the four arc segments 12 are alternately arranged circumferentially to form a square tubular structure. The widths of the four planar segments 11 are equal, and the radians of the four arc segments 12 are also equal, making the square tubular structure formed by the four planar segments 11 and the four arc segments 12 centrally symmetric about an axis O' of the main shaft 1. A ratio of the width x' of the planar segment 11 to a wall thickness t of the main shaft 1, i.e., a width-to-thickness ratio x'/t, is between 20 and 25.

It should be noted that the width-to-thickness ratio x'/t ranging from 20 to 25 includes both the case where x'/t equals 20 and the case where x'/t equals 25. When the width-to-thickness ratio x'/t exceeds 25, under the premise of a same material, a same type of cross-section, and a same wall thickness, the radian of the arc segment 12 decreases, leading to a reduction in bending strength. Conversely, when the width-to-thickness ratio x'/t is less than 20, under the premise of a same material, a same type of cross-section, and a same wall thickness, as the radian of the arc segment 12 increases, the plastic section modulus decreases, and the polar moment of inertia also decreases, which in turn results in a decline in both bending and torsional strength. Therefore, the main shaft 1 of the photovoltaic tracking support 100 of the present invention has an optimal range for the width-to-thickness ratio. Within this range, the main shaft 1 of the photovoltaic tracking support 100 achieves a balance between torsional and bending strengths, ensuring superior stability.

Referring to FIG. 1 to FIG. 4, furthermore, the width-to-thickness ratio x'/t is between 20 and 22.5. It should be noted that the width-to-thickness ratio x'/t being between 20 and 22.5 includes the cases where x'/t equals 20 and x'/t equals 22.5. Preferably, x'/t is 22.5, at which point the bending strength and torsional strength of the main shaft 1 of the photovoltaic tracking support 100 of the present invention achieve the best matching effect.

Referring to FIG. 1 to FIG. 4, in one embodiment, the main shaft 1 is shaped as a square tube. Specifically, the main shaft 1 is the square tube with rounded corner designs. That is, based on the square tube with a square cross-sectional shape, the main shaft 1 further incorporates rounded corner designs at the vertices formed by adjacent sides of the square. The rounded corners at the vertices form the arc segments 12. The original sides of the square, after rounding corners, form the planar segments 11. The center O of the arc segment 12 is at a vertical distance from the two adjacent planar segments 11 equal to the radius of curvature r of the arc segment 12. The design of the main shaft 1, combining the square tube with rounded corners, primarily addresses the issue of how to ensure that the main shaft 1 possesses both good torsional strength and bending resistance. In terms of material selection, the main shaft 1 can be made of steel materials such as Q355 steel, Q420 steel, Q500 steel, or Q550 steel. Additionally, the radius of curvature r of the arc segment 12 can be further specified as 25 mm to 70 mm, inclusively, and/or the wall thickness t of the main shaft 1 can be 2 mm to 3 mm, inclusively. An original width x of the main shaft 1 is 100 mm to 200 mm, where the original width x is a distance between the outer walls of two opposing planar segments 11. This configuration ensures that the main shaft 1 achieves optimal torsional and/or bending strength, facilitating an advantageous width-to-thickness ratio range.

Referring to FIG. 1 to FIG. 4, in a first embodiment of the specific embodiment, there are four the planar segments 11 and four the arc segments 12, with the arc segments 12 located at the rounded corners between adjacent planar segments 11. This further defines the main shaft 1 as the square tube form where the planar segments 11 and the arc segments 12 are alternately arranged, achieving a balance and compromise between torsional strength and bending strength, thereby providing better stability.

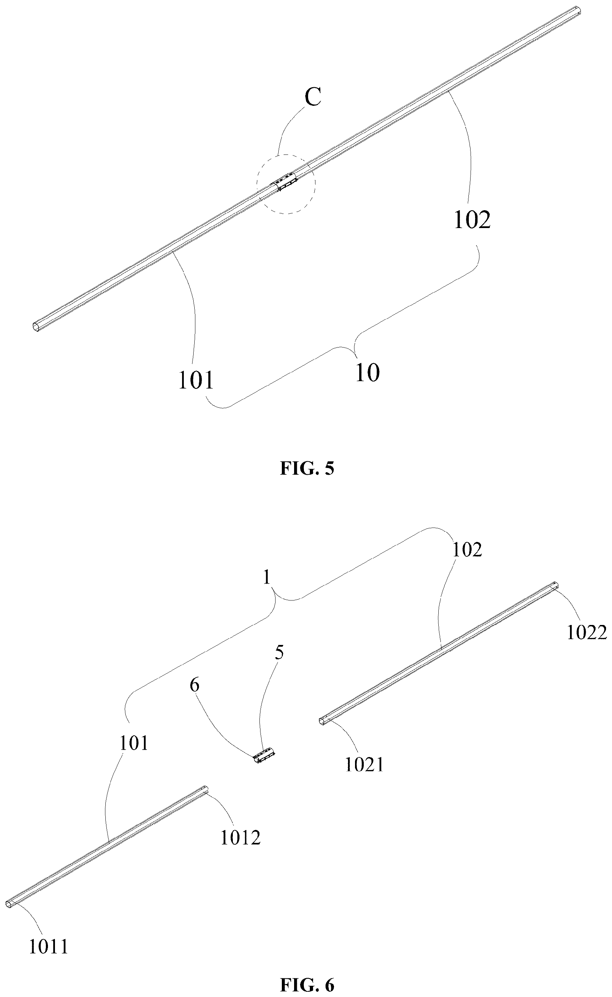

Referring to FIG. 5 to FIG. 12, in other embodiments (for example, a second embodiment and a third embodiment) of the specific embodiments, the main shaft 1 includes a plurality of shaft segments 10 arranged separately. The plurality of shaft segments 10 are connected end to end to form an integral unit. The shaft segments 10 include a first shaft segment 101 and a second shaft segment 102 which are arranged adjacent to each other front and back. The first shaft segment 101 and the second shaft segment 102 are connected sequentially from front to back in various ways to form a whole. That is, the main shaft 1 is structured as separate segments that are then joined together into one piece.

Referring to FIG. 5 to FIG. 10, the main shaft 1 includes a first shaft segment 101, a second shaft segment 102, and a connecting component 5. The first shaft segment 101 and the second shaft segment 102 are arranged end-to-end. The first shaft segment 101 includes a first end portion 1011 and a second end portion 1012 which are disposed opposite to each other. The second shaft segment 102 includes a third end portion 1021 and a fourth end portion 1022 which are disposed opposite to each other. The first shaft segment 101 and the second shaft segment 102 arranged end-to-end means that the second end portion 1012 and the third end portion 1021 are connected to each other along a straight line direction in which the main shaft 1 extends, or are connected by an additional connecting structure.

Referring to FIG. 5 to FIG. 10, in the second embodiment, the connecting component 5 is wrapped around an exterior of the second end portion and an exterior of the third end portion 1021.

Referring to the second embodiment shown in FIG. 5 to FIG. 10, when one end of the connecting component 5 covers the exterior of the second end portion 1012 and the other end covers the exterior of the third end portion 1021, it is preferable that the connecting component 5 is of a split type. The split connecting component 5 facilitates wrapping it around the shaft section 10. However, after being wrapped, an upper plate 51 and a lower plate 52 of the split connecting component 5 require additional ordinary bolts 62 for further self-installation, and positioning to securely fasten and connect the first shaft segment 101 and the second shaft segment 102 into one unit. However, in other embodiments, the connecting component 5 may also be of an integrated design. The second end portion 1012 is inserted into one end of the integrated connecting component 5, and the third end portion 1021 is inserted into the other end of the integrated connecting component 5. That is, the integrated connecting component 5 envelops the exteriors of the second end portion 1012 and the third end portion 1021. Then, a long bolt 61 is passed through the connecting component 5, the second end portion 1012 and the third end portion 1021 to achieve the connection between the first shaft segment 101 and the second shaft segment 102.

Referring to FIG. 5 to FIG. 10, the main shaft 1 further includes a fastener 6. Specifically, in the second embodiment, the connecting component 5 covers the exterior of the second end portion 1012 and the exterior of the third end portion 1021. The fastener 6 passes through the connecting component 5, the second end portion 1012 and the third end portion 1021. It is noted that the fastener 6 in the second embodiment is a long bolt 61. This is because the fastener 6 (the long bolt 61) in the second embodiment extends from an upper side of the upper plate 51 to a lower side of the lower plate 52, effectively spanning the entire diameter of the main shaft 1, thereby enabling separate encapsulation and positioning connection functions.

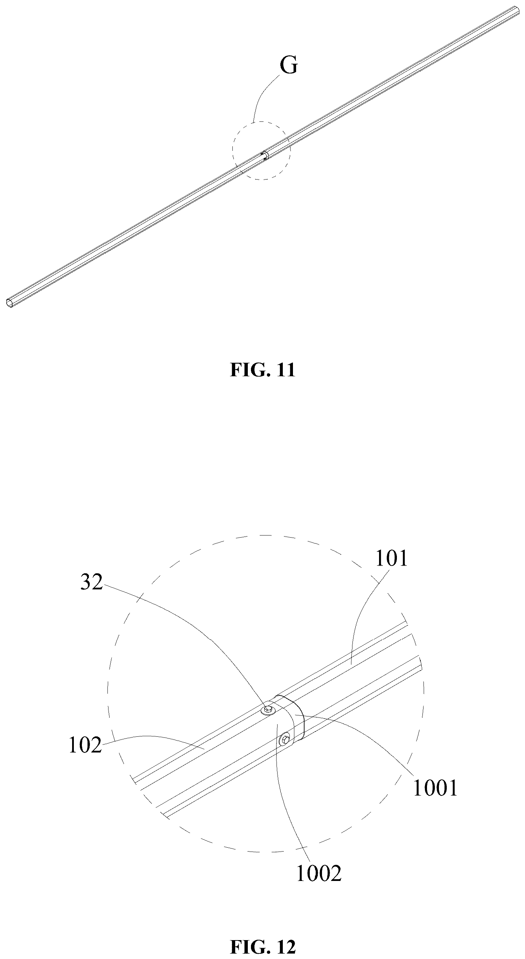

Referring to FIG. 11 and FIG. 12, in the third embodiment, the main shaft 1 includes a first shaft segment 101 and a second shaft segment 102, but does not include the connecting component 5 of the second embodiment. The first shaft segment 101 and the second shaft segment 102 each includes two opposite ends, one of which is a reduced-diameter end portion 1001 and the other of which is a non-reduced-diameter accommodating end portion 1002. The reduced-diameter end portion 1001 of the first shaft segment 101 is inserted into the non-reduced-diameter accommodating end portion 1002 of the second shaft segment 102. The main shaft 1 in the third embodiment further includes a fastener 6. The fastener 6 passes through the reduced-diameter end portion 1001 of the first shaft segment 101 and the non-reduced-diameter accommodating end portion 1002 of the second shaft segment 102. It should be noted that the third embodiment also requires the use of fastener 6, and the fastener 6 employs the same long bolt 61 as in the second embodiment. One end of the long bolt 61 passes through and connects the reduced-diameter end portion 1001 of the first shaft segment 101 and the non-reduced-diameter accommodating end portion 1002 of the second shaft segment 102, thereby achieving a fixed connection between the first shaft segment 101 and the second shaft segment 102. In the third embodiment, the first shaft segment 101 and the second shaft segment 102 are configured with the same structure, significantly improving processing and installation convenience.

considering the main shaft 1 as an example, the main shaft 1 is a square tube made of Q500 steel, with an original width ranging from 100 mm to 200 mm, inclusively. The original width x of main shaft 1 refers to the distance between the outer walls of the two opposing planar segments 11. As shown in Table 1 below, in a specific embodiment, the original width x and wall thickness t of main shaft 1 remain unchanged. In this embodiment, the wall thickness t is 2 mm, and ST155 indicates that the original width x of main shaft 1 is 155 mm, where x'=x-2r. The curvature radius r of the arc segment 12 varies with different width-to-thickness ratios. From Table 1, it can be observed that as the width-to-thickness ratio decreases, the bending strength initially increases gradually. When it increases to a certain extent, it begins to decrease gradually. At the same time, as the width-to-thickness ratio decreases, while the original width x and wall thickness t of main shaft 1 remain unchanged, a larger curvature radius r of the arc segment 12 results in a smaller cross-sectional area of main shaft 1, and the torsional strength tends to decrease gradually. While ensuring that the cross-section of main shaft 1 is compact, when the width-to-thickness ratio falls within the range of 20 to 25, and further within 20 to 22.5. As shown in Table 1 when the width-to-thickness ratio is 22.5, the corresponding curvature radius r of the arc segment 12 is 55 mm. At this point, it achieves both excellent bending strength and torsional strength, thereby better meeting the stability requirements of main shaft 1 and ensuring the normal operation of the photovoltaic tracking support 100. Besides, when the width-to-thickness ratio is 22.5, the corresponding original width x is 155 mm, and the curvature radius r of the arc segment 12 is 55 mm. Through calculation, the width x' of the planar segment 11 is determined to be 45 mm, which not only meets the bending and torsional strength requirements, but also provides an optimal cross-sectional size, reducing processing and inspection difficulties and improving production efficiency.

**Table 1**

| cross-sectional shape | width-to-thickness ratio | wall thickness (mm) | flexural strength (kN×m) | torsional strength (kN×m) |
|---|---|---|---|---|
| ST155(r=45) | 32.5 | 2.00 | 20.877 | 23.487 |
| ST155(r=50) | 27.5 | 2.00 | 21.312 | 23.056 |
| ST155(r=52.5) | 25 | 2.00 | 22.640 | 22.823 |
| ST155(r=55) | 22.5 | 2.00 | 22.682 | 22.142 |
| ST155(r=57.5) | 20 | 2.00 | 22.299 | 20.478 |
| ST155(r=60) | 17.5 | 2.00 | 21.913 | 18.982 |
| ST155(r=65) | 12.5 | 2.00 | 20.870 | 16.399 |

As shown in Table 2 below, in another embodiment, based on the main shaft 1 from Table 1, the wall thickness t of the square tube remains unchanged at 2 mm, while the original width x of the main shaft 1 is increased to 160 mm. In this case, the corresponding bending strength and torsional strength vary with different width-to-thickness ratios. Similarly, when the width-to-thickness ratio falls within the range of 20 to 25, as shown in Table 2 for ratios of 20 and 25, the corresponding curvature radius r of the arc segment 12 is 60 mm and 55 mm, respectively. This configuration achieves both excellent bending strength and torsional strength, thereby better meeting the stability requirements of the main shaft 1 and ensuring the normal operation of the photovoltaic tracking support 100. Besides, when the width-to-thickness ratio is 20 or 25, the corresponding original width x is 160 mm, the curvature radius r of the arc segment 12 is 60 mm and 55 mm, respectively, and the width x' of the planar segment 11 is 40 mm and 50 mm, respectively. The original width x, the curvature radius r of the arc segment 12, and the width x' of the planar segment 11 are all multiples of 5, which not only satisfies the bending and torsional strength requirements but also provides an optimal cross-sectional size, reducing processing and inspection difficulties and improving production efficiency.

**Table 2**

| cross-sectional shape | width-to-thickness ratio | wall thickness (mm) | flexural strength (kN×m) | torsional strength (kN×m) |
|---|---|---|---|---|
| ST160(r=45) | 35.0 | 2.00 | 22.008 | 25.166 |
| ST160(r=50) | 30.0 | 2.00 | 22.219 | 24.735 |
| ST160(r=55) | 25.0 | 2.00 | 23.502 | 23.788 |
| ST160(r=60) | 20.0 | 2.00 | 24.233 | 20.427 |
| ST160(r=65) | 15.0 | 2.00 | 22.674 | 17.681 |

As shown in Table 3 below, in another embodiment, based on the main shaft 1 from Table 1, the wall thickness t of the main shaft 1 is kept constant at 2 mm, while the original width x of the main shaft 1 is reduced to 150 mm. Similarly, when the width-to-thickness ratio falls within the range of 20 to 25, as indicated in Table 2 for ratios of 20 and 25, the curvature radius r of the arc segment 12 is 55 mm and 50 mm, respectively. This configuration achieves both excellent bending strength and torsional strength, thereby better meeting the stability requirements of the main shaft 1 and ensuring the normal operation of the photovoltaic tracking support 100. Likewise, when the width-to-thickness ratio is 20 and 25, the corresponding original width x is 150 mm, the curvature radius r of the arc segment 12 is 55 mm and 50 mm, and the width x' of the planar segment 11 is 40 mm and 50 mm, respectively. The original width x, the curvature radius r of the arc segment 12, and the width x' of the planar segment 11 are all multiples of 5, which not only satisfies the bending and torsional strength requirements but also provides an optimal cross-sectional size, reducing processing and inspection difficulties and improving production efficiency.

**Table 3**

| cross-sectional shape | width-to-thickness ratio | wall thickness (mm) | flexural strength (kN×m) | torsional strength (kN×m) |
|---|---|---|---|---|
| ST150(r=45) | 30.0 | 2.00 | 19.745 | 21.861 |
| ST150(r=50) | 25.0 | 2.00 | 21.116 | 21.430 |
| ST150(r=55) | 20.0 | 2.00 | 21.488 | 20.548 |
| ST150(r=60) | 15.0 | 2.00 | 20.242 | 17.583 |
| ST150(r=65) | 10.0 | 2.00 | 19.135 | 15.158 |

From Table 1 and Table 2, it can be seen that when the width-to-thickness ratios are 22.5, 20, and 25, the main shaft 1 exhibits superior bending and torsional strength compared to when the width-to-thickness ratio falls outside the range of 20 to 25. However, the original width x of the main shaft 1 in Table 2 is greater than that in Table 1, resulting in a higher cost for the main shaft 1 in Table 2. In Table 1, the main shaft 1 with the width-to-thickness ratio of 22.5 offers a better cost-performance ratio while maintaining superior bending and torsional strength. Furthermore, comparing Table 1 and Table 3, the bending and torsional strengths corresponding to a width-to-thickness ratio of 22.5 in Table 1 are better than those corresponding to ratios of 20 and 25 in Table 3. Although the main shaft 1 in Table 3 has a lower cost due to its smaller original width x compared to the original width x of the main shaft 1 in Table 1, the bending and torsional strengths in Table 1 better meet the stability requirements of the main shaft 1. Therefore, considering Table 1, Table 2 and Table 3, the width-to-thickness ratio of 22.5 provides superior bending and torsional strength along with a smaller cross-sectional area, effectively balancing cost while maintaining excellent bending and torsional performance. It is noted that the original width x and the width x' of the planar segment 11 in the present invention represent different meanings.

x represents the original width of the main shaft 1, which is a side length of the cross-section before rounding the corners of the main shaft 1, or the original width of the main shaft 1 is a perpendicular distance between the outer walls of the two opposing planar segments 11.

x' represents the width of the planar segment 11, which is a length of the planar segment 11 in the cross-section of the main shaft 1 after rounding the corners.

As shown in Table 1 to Table 15, under the same material and cross-sectional shape type, variations in bending strength and torsional strength are provided for the main shaft 1 with original widths x of 120 mm, 150 mm, 155 mm, 160 mm, and 180 mm; wall thicknesses t of 2 mm, 2.5 mm, and 3 mm; and curvature radius r of the arc segment 12 ranging from 25 mm to 70 mm. It can be observed that within the width-to-thickness ratio range of 20 to 25, the main shaft 1 achieves both superior bending strength and torsional strength, exhibits high stability, and effectively balances cost considerations.

**Table 4**

| cross-sectional shape | width-to-thickness ratio | wall thickness (mm) | flexural strength (kN×m) | torsional strength (kN×m) |
|---|---|---|---|---|
| ST155(r=45) | 26.0 | 2.50 | 28.791 | 29.178 |
| ST155(r=46.25) | 25.0 | 2.50 | 29.507 | 29.049 |
| ST155(r=50) | 22.0 | 2.50 | 30.359 | 28.642 |
| ST155(r=52.5) | 20.0 | 2.50 | 29.903 | 28.352 |
| ST155(r=55) | 18.0 | 2.50 | 29.44 | 28.05 |
| ST155(r=60) | 14.0 | 2.50 | 28.107 | 27.396 |
| ST155(r=65) | 10.0 | 2.50 | 26.584 | 26.686 |

**Table 5**

| cross-sectional shape | width-to-thickness ratio | wall thickness (mm) | flexural strength (kN×m) | torsional strength (kN×m) |
|---|---|---|---|---|
| ST155(r=37.75) | 26.5 | 3.00 | 35.304 | 35.601 |
| ST155(r=40) | 25.0 | 3.00 | 36.508 | 35.367 |
| ST155(r=45) | 21.7 | 3.00 | 38.280 | 34.797 |
| ST155(r=47.5) | 20.0 | 3.00 | 37.753 | 34.486 |
| ST155(r=50) | 18.3 | 3.00 | 37.222 | 34.157 |
| ST155(r=55) | 15.0 | 3.00 | 36.14 | 33.45 |
| ST155(r=60) | 11.7 | 3.00 | 34.413 | 32.669 |

**Table 6**

| cross-sectional shape | width-to-thickness ratio | wall thickness (mm) | flexural strength (kN×m) | torsional strength (kN×m) |
|---|---|---|---|---|
| ST160(r=45) | 28.0 | 2.50 | 28.981 | 31.270 |
| ST160(r=48.75) | 25.0 | 2.50 | 31.285 | 30.874 |
| ST160(r=50) | 24.0 | 2.50 | 32.063 | 30.734 |
| ST160(r=55) | 20.0 | 2.50 | 31.566 | 30.140 |
| ST160(r=60) | 16.0 | 2.50 | 30.472 | 29.489 |
| ST160(r=65) | 12.0 | 2.50 | 28.892 | 28.779 |

**Table 7**

| cross-sectional shape | width-to-thickness ratio | wall thickness (mm) | flexural strength (kN×m) | torsional strength (kN×m) |
|---|---|---|---|---|
| ST160(r=40) | 26.7 | 3.00 | 37.244 | 37.870 |
| ST160(r=42.5) | 25.0 | 3.00 | 38.685 | 37.594 |
| ST160(r=45) | 23.3 | 3.00 | 40.149 | 37.300 |
| ST160(r=50) | 20.0 | 3.00 | 39.887 | 36.660 |
| ST160(r=55) | 16.7 | 3.00 | 38.777 | 35.951 |
| ST160(r=60) | 13.3 | 3.00 | 37.322 | 35.172 |

**Table 8**

| cross-sectional shape | width-to-thickness ratio | wall thickness (mm) | flexural strength (kN×m) | torsional strength (kN×m) |
|---|---|---|---|---|
| ST150(r=40) | 28.0 | 2.50 | 25.799 | 27.631 |
| ST150(r=43.75) | 25.0 | 2.50 | 27.780 | 27.278 |
| ST150(r=45) | 24.0 | 2.50 | 28.449 | 27.153 |
| ST150(r=50) | 20.0 | 2.50 | 28.272 | 26.617 |
| ST150(r=55) | 16.0 | 2.50 | 27.356 | 26.023 |
| ST150(r=60) | 12.0 | 2.50 | 25.830 | 25.371 |

**Table 9**

| cross-sectional shape | width-to-thickness ratio | wall thickness (mm) | flexural strength (kN×m) | torsional strength (kN×m) |
|---|---|---|---|---|
| ST150(r=35) | 26.7 | 3.00 | 33.155 | 33.446 |
| ST150(r=37.5) | 25 | 3.00 | 34.391 | 33.204 |
| ST150(r=40) | 23.3 | 3.00 | 35.645 | 32.945 |
| ST150(r=45) | 20.0 | 3.00 | 35.629 | 32.375 |
| ST150(r=50) | 16.7 | 3.00 | 34.601 | 31.735 |
| ST150(r=55) | 13.3 | 3.00 | 33.554 | 31.026 |

**Table 10**

| cross-sectional shape | width-to-thickness ratio | wall thickness (mm) | flexural strength (kN×m) | torsional strength (kN×m) |
|---|---|---|---|---|
| ST120(r=30) | 30 | 2.00 | 13.168 | 14.258 |
| ST120(r=35) | 25 | 2.00 | 14.223 | 13.966 |
| ST120(r=40) | 20 | 2.00 | 14.475 | 13.628 |
| ST120(r=45) | 15 | 2.00 | 13.808 | 13.243 |
| ST120(r=50) | 10 | 2.00 | 12.847 | 12.812 |

**Table 11**

| cross-sectional shape | width-to-thickness ratio | wall thickness (mm) | flexural strength (kN×m) | torsional strength (kN×m) |
|---|---|---|---|---|
| ST120(r=25) | 28 | 2.5 | 17.309 | 17.985 |
| ST120(r=28.75) | 25 | 2.5 | 18.478 | 17.762 |
| ST120(r=30) | 24 | 2.5 | 18.872 | 17.681 |
| ST120(r=35) | 20 | 2.5 | 19.108 | 17.318 |
| ST120(r=40) | 16 | 2.5 | 18.425 | 16.898 |
| ST120(r=45) | 12 | 2.5 | 17.726 | 16.42 |

**Table 12**

| cross-sectional shape | width-to-thickness ratio | wall thickness (mm) | flexural strength (kN×m) | torsional strength (kN×m) |
|---|---|---|---|---|
| ST120(r=20) | 26.7 | 3 | 22.237 | 21.7 |
| ST120(r=22.5) | 25 | 3 | 22.963 | 21.563 |
| ST120(r=25) | 23.3 | 3 | 23.696 | 21.408 |
| ST120(r=30) | 20 | 3 | 23.55 | 21.047 |
| ST120(r=35) | 16.7 | 3 | 22.753 | 20.616 |
| ST120(r=40) | 13.3 | 3 | 21.938 | 20.115 |

**Table 13**

| cross-sectional shape | width-to-thickness ratio | wall thickness (mm) | flexural strength (kN×m) | torsional strength (kN×m) |
|---|---|---|---|---|
| ST180(r=60) | 30 | 2.00 | 27.591 | 26.673 |
| ST180(r=65) | 25 | 2.00 | 29.395 | 23.22 |
| ST180(r=70) | 20 | 2.00 | 28.479 | 20.356 |
| ST180(r=75) | 15 | 2.00 | 27.548 | 17.947 |
| ST180(r=80) | 10 | 2.00 | 26.604 | 15.894 |

**Table 14**

| cross-sectional shape | width-to-thickness ratio | wall thickness (mm) | flexural strength (kN×m) | torsional strength (kN×m) |
|---|---|---|---|---|
| ST180(r=55) | 28 | 2.5 | 35.875 | 39.185 |
| ST180(r=58.75) | 25 | 2.5 | 38.903 | 38.702 |
| ST180(r=60) | 24 | 2.5 | 39.609 | 38.534 |
| ST180(r=65) | 20 | 2.5 | 38.52 | 37.824 |
| ST180(r=70) | 16 | 2.5 | 37.249 | 35.37 |
| ST180(r=75) | 12 | 2.5 | 35.55 | 31.182 |

**Table 15**

| cross-sectional shape | width-to-thickness ratio | wall thickness (mm) | flexural strength (kN×m) | torsional strength (kN×m) |
|---|---|---|---|---|
| ST180(r=50) | 26.7 | 3 | 46.1 | 47.482 |
| ST180(r=52.5) | 25 | 3 | 48.003 | 47.136 |
| ST180(r=55) | 23.3 | 3 | 50.112 | 46.773 |
| ST180(r=60) | 20 | 3 | 48.854 | 45.994 |
| ST180(r=65) | 16.7 | 3 | 47.576 | 45.146 |
| ST180(r=70) | 13.3 | 3 | 45.501 | 44.228 |

In summary, the main shaft 1 of the photovoltaic tracking support 100 of the present invention features a compact cross-section with the width-to-thickness ratio x'/t ranging between 20 and 25. Within this ratio range, the cross-section with superior performance can be achieved, offering excellent bending and torsional strength, thereby striking a balance and integration among torsional strength, bending strength, and cost, resulting in enhanced stability. Additionally, the main shaft 1 of the photovoltaic tracking support 100 possesses optimal cross-sectional dimensions. During the manufacturing process of the main shaft 1 of the photovoltaic tracking support 100, the production procedures can be simplified, reducing the complexity of processing and inspection, and improving production efficiency.

The above embodiments are only used to illustrate the present invention and not to limit the technical solutions described in the present invention. The understanding of this specification should be based on those skilled in the art. Descriptions of directions, although they have been described in detail in the above-mentioned embodiments of the present invention, those skilled in the art should understand that modifications or equivalent substitutions can still be made to the application, and all technical solutions and improvements that do not depart from the spirit and scope of the application should be covered by the claims of the application.

## Claims

1. A main shaft of a photovoltaic tracking support, wherein a cross-section of the main shaft is a compact cross-section, the cross-section of the main shaft comprises four planar segments (11) and four arc segments (12), the four planar segments (11) and the four arc segments (12) are alternately arranged sequentially along a circumferential direction to form a square tubular structure; widths of the four planar segments (11) are equal and radians of the four arc segments (12) are also equal, causing the square tubular structure formed by the four planar segments (11) and the four arc segments (12) to be centrally symmetrical relative to an axis of the main shaft, and a ratio of a width x' of the planar segment (11) to a wall thickness t of the main shaft, namely a width-to-thickness ratio x'/t, is between 20 and 25, inclusively.

2. The main shaft of the photovoltaic tracking support according to claim 1, wherein the width-to-thickness ratio x'/t is between 20 and 22.5, inclusively.

3. The main shaft of the photovoltaic tracking support according to claim 1, wherein a material of the main shaft is Q355 steel, Q420 steel, Q500 steel, or Q550 steel.

4. The main shaft of the photovoltaic tracking support according to claim 1, wherein a radius of curvature r of the arc segment (12) is 25 mm to 70 mm, inclusively.

5. The main shaft of the photovoltaic tracking support according to claim 1, wherein the wall thickness t of the main shaft is 2 mm to 3 mm, inclusively.

6. The main shaft of the photovoltaic tracking support according to claim 1, wherein an original width x of the main shaft is a vertical distance between outer walls of two opposite planar segments (11), a radius of curvature of the arc segment (12) is r, wherein x'=x-2r, and the original width x of the main shaft is 100 mm to 200 mm, inclusively.

7. The main shaft of the photovoltaic tracking support according to any one of claims 1 to 6, wherein the main shaft comprises a plurality of shaft segments (10) which are separably arranged, and the plurality of shaft segments (10) are connected end to end to form an integral whole.

8. The main shaft of the photovoltaic tracking support according to claim 7, wherein the main shaft comprises a first shaft segment (101), a second shaft segment (102) and a connecting component (5); the first shaft segment (101) and the second shaft segment (102) are connected end to end; the first shaft segment (101) comprises a first end portion (1011) and a second end portion (1012) which are arranged oppositely; the second shaft segment (102) comprises a third end portion (1021) and a fourth end portion (1022) which are arranged oppositely; the second end portion (1012) and the third end portion (1021) are arranged adjacent to each other in a linear direction in which the main shaft extends, and the connecting component (5) envelops exteriors of the second end portion (1012) and the third end portion (1021).

9. The main shaft of the photovoltaic tracking support according to claim 8, wherein the connecting component (5) is of a split type or an integral type.

10. The main shaft of the photovoltaic tracking support according to claim 8, wherein the main shaft further comprises a fastener (6), and the fastener (6) passes through the connecting component (5), the second end portion (1012) and the third end portion (1021).

11. The main shaft of the photovoltaic tracking support according to claim 8, wherein the main shaft comprises a first shaft segment (101), a second shaft segment (102) and a fastener (6); the first shaft segment (101) and the second shaft segment (102) each comprises a reduced-diameter end portion (1001) and a non-reduced-diameter accommodating end portion (1002) which are arranged oppositely; the reduced-diameter end portion (1001) of the first shaft segment (101) is inserted into the non-reduced-diameter accommodating end portion (1002) of the second shaft segment (102), and the fastener (6) extends through the reduced-diameter end portion (1001) of the first shaft segment (101) and the non-reduced-diameter accommodating end portion (1002) of the second shaft segment (102).

12. A photovoltaic tracking support, comprising a stand column (2), a driving device (3), a purlin (4) and a main shaft of a photovoltaic tracking support according to any one of claims 1 to 11; wherein the main shaft of the photovoltaic tracking support is installed at a top of the stand column (2); the purlin (4) is installed on the main shaft of the photovoltaic tracking support for supporting a photovoltaic module; and a driving end of the driving device (3) is connected to the main shaft of the photovoltaic tracking support for driving the main shaft of the photovoltaic tracking support to rotate.
